# EUROPÄISCHE PATENTSCHRIFT

(11) **EP 0 647 876 B1**
(45) Veröffentlichungstag und Bekanntmachung des Hinweises auf die Patenterteilung: **13.09.2000**
(21) Anmeldenummer: 93810718.2
(22) Anmeldetag: 12.10.1993
(51) Int. Cl.: G03B 27/73

(54) **Vorrichtung zum Aufkopieren von fotografischen Kopiervorlagen**
Device for copying photographic originals
Dispositif pour copier des originaux photographiques

(43) Veröffentlichungstag der Anmeldung: 12.04.1995
(73) Patentinhaber: GRETAG IMAGING AG, CH-8105 Regensdorf (CH)
(72) Erfinder: Atzrodt, Patrik, CH-8196 Wil (CH); Knecht, Hugo, CH-8165 Schöfflisdorf (CH)
(74) Vertreter: Schwabe - Sandmair - Marx

(56) Entgegenhaltungen:
- WO-A-86/02176
- CH-A- 673 065
- US-A- 4 645 350
- US-A- 4 764 793
- US-A- 5 118 183

## Beschreibung

Die Erfindung betrifft eine Vorrichtung zum Aufkopieren von im wesentlichen transparenten fotografischen Kopiervorlagen auf fotografisches Kopiermaterial gemäss dem Oberbegriff von Patentanspruch 1 sowie ein Minilabor zur Herstellung von Kopien von fotografischen Kopiervorlagen gemäss dem entsprechenden unabhängigen Patentanspruch.

Die Herstellung von Kopien, üblicherweise Papierbilder, von Kopiervorlagen, üblicherweise Negativfilme, erfolgt heute mehr oder weniger vollautomatisch. Der Kunde überlässt dem Händler entweder einen unentwickelten Film oder bereits entwickelte Negative (Nachbestellungen) und teilt ihm mit, von welchem Negativ er welche Anzahl von Kopien in welchem Format wünscht. Der Film oder die Negative werden entweder weitergereicht an Grossentwicklungslabors oder mit einem sogenannten Mini-oder Microlabor beim Händler verarbeitet..

Sowohl in Grossentwicklungslabors als auch in Minilabors werden zunächst die Negative entwickelt (sofern sie nicht bereits entwickelt sind wie im Falle von Nachbestellungen), die entwickelten Negative werden dann auf Papier aufbelichtet, und anschliessend wird das berichtete Papier entwickelt. Für die Entwicklung der Negative wie auch für die Entwicklung des berichteten Papiers sind nasschemische Bäder erforderlich. Während in Grossentwicklunglabors die einzelnen Anlagenteile (nasschemischer Teil für die Negative, Printer, nasschemischer Teil für das Papier) üblicherweise voneinander getrennt sind, sind sie bei den sogenannten Minilabors alle in das Minilabor integriert.

Sowohl in Grossentwicklungslabors als auch in Minilabors müssen die nasschemischen Anlagenteile regelmässig routinemässig überprüft werden, um die Qualität der Kopien zu gewährleisten. Aus diesem Grund müssen auch die Einstellungen des Kopiergeräts, also des Printers, täglich routinemässig überprüft werden. Zu diesen Zwecken werden in der fotografischen Industrie Densitometer eingesetzt.

Zur Überprüfung der nasschemischen Teile, also der Film- bzw. Papierentwicklungsbäder, werden entsprechende Filmchemie- bzw. Papierchemiestreifen ausgemessen. Diese Steifen sind bereits beim jeweiligen Film- bzw. Papierhersteller normiert belichtet worden und werden in regelmässigen Abständen in den jeweiligen Film- bzw. Papierentwicklungsbädern entwickelt Die entwickelten Film- bzw. Papierstreifen werden mit dem Densitometer fotometrisch ausgewertet und mit den Sollangaben des jeweiligen Herstellen verglichen. In Abhängigkeit von den ermittelten Ergebnissen werden die Entwicklungsbäder aufgefrischt bzw. ergänzt, erneuert oder auch unverändert beibehalten.

Zur Überprüfung der Einstellungen des fotografischen Printers werden ein oder mehrere Standardnegative auf Fotopapier aufbelichtet und mit einer arbeitsbereiten Chemie entwickelt. Die entwickelten Bilder werden mit dem Densitometer fotometrisch ausgewertet und mit Sollvorgaben verglichen. In Abhängigkeit der ermittelten Werte können die Grundeinstellungen des Printers variiert werden.

Densitometer die für solche Zwecke geeignet sind, sind beispielsweise in der US 5,118,183 A beschrieben und sind auch in Form von Geräten der Serie 880 der Firma X-Rite bekannt. Diese Densitometer sind sowohl für den Remissionsbetrieb für opake Teststreifen als auch für den Transmissionsbetrieb von transparenten Testsireifen ausgerüstet und weisen entsprechend eine ortsfeste Remissions- bzw. eine ortsfeste Transmissions-Messandordnung auf. Ebenfalls ortsfest innerhalb des Geräts angeordnete Filter erlauben es, die entsprechenden Remissions- bzw. Transmissionsdichten des Teststreifens für unterschiedliche Wellenlängen, vorzugsweise für die drei Grundfarben Rot, Grün und Blau, zu bestimmen. Eine motorische Transporteinrichtung transportiert den Teststreifen durch das Gerät

Mit Hilfe eines solchen Geräts ist es natürlich möglich, die vom Hersteller normiert belichteten Teststreifen nach ihrer Entwicklung in den nasschemischen Bädern auszumessen und anhand der Messergebnisse zu überprüfen, ob die Bäder aufgefrischt, ergänzt oder erneuert werden müssen oder ob sie unverändert beibehalten werden können. Ebenso ist es mit Hilfe eines solchen Geräts möglich, die Grundeinstellungen des Printers zu überprüfen, indem Normbilder ausgemessen werden. In Abhängigkeit der Messergebnisse können dann die Grundeinstellungen des Printers variiert werden.

Allerdings handelt es sich bei dem beschriebenen Gerät um ein selbständiges Gerät was zwar grundsätzlich mit dem Printer verbunden werden kann, jedoch trotzdem ein selbständiges Gerät bleibt Das hat zur Folge, dass das Bedienungspersonal ein zusätzliches Gerät bedienen muss. Es ist daher schon vorgeschlagen worden, das Densitometer in den Printer zu intergrieren. Dies ist bei Grossentwicklungslabors auch mit keinen wesentlichen Problemen verbunden, da solche Grossentwicklungslabors nicht in erster Linie platzsparend konzipiert sind. Hingegen stellt diese Lösung bei Minilabors doch einen recht erheblichen Nachteil dar, da in diesen Minilabors ausser dem Printer ja auch noch die nasschemischen Teile räumlich untergebracht sind und der Platzbedarf bei Minilabors in Zeiten zunehmender Platzknappheit doch eine nicht unwesentliche Rolle spielt.

Aus US 4,764,793 A ist ein fotografischer Drucker bekannt, der einen integrierten Densitometer enthält, der einen einzigen Lichtsensor verwendet. Der Densitometer wird zur Durchführung von Transmessionsmessungen und Reflexions-Dichtemessungen verwendet. Der Abtastapparat und der Flächendichte-Meßapparat verwenden denselben Lichtprojektor und die gleiche optische Hardware für das Drucken von Negativen.

Aus CH 673 065 A ist eine Vorrichtung zur Herstellung von fotografischen Kopien bekannt. Die Vorrichtung umfaßt eine Kopierlichtquelle, eine Kopierfilteranordnung mit additiven Kopierfiltern, einen Lichtmischer, eine Vorlagenbühne, eine Kopieroptik, eine Kopiermaterialbühne, ein Antriebsmittel für Kopiervorlage und Kopiermaterial, eine fotoelektrische Abtasteinrichtung für die Kopiervorlagen und eine elektronische Steuerung mit einem Belichtungsrechner. Das Kopierlicht wird gleichzeitig als Meßlicht verwendet.

Es ist daher die Aufgabe der Erfindung, ein Gerät vorzuschlagen, bei dem einerseits vom Bedienungspersonal kein zusätzliches Gerät (separates Densitometer) bedient werden muss, andererseits soll das Gerät möglichst platzsparend konzipiert sein, damit es problemlos in ein Minilabor integriert werden kann.

Erfindungsgemäss wird diese Aufgabe durch eine Aufkopiervorrichtung gelöst, bei der die Transmissions- und die Remissions-Messanordnung baulich im Bereich der Vorlagen-Bühne vorgesehen sind, auf der die Kopiervorlage transportiert, ausgemessen und auf das Kopiermaterial aufkopiert wird. Dadurch wird einerseits erreicht, dass das Bedienungspersonal immer nur ein und dasselbe Gerät bedienen muss. Zum anderen ermöglicht dies eine besonders platzsparende Gerätekonzeption, was anhand der detaillierten Beschreibung noch deutlicher wird.

Ein Ausführungsbeispiel der erfindungsgemässen Vorrichtung zeichnet sich dadurch aus, dass auf der Bühne die Messstation zum Ausmessen der Kopiervorlage, die Belichtungsstation zum Aufkopieren der Vorlage auf das Kopiermaterial, sowie die Transmissions-Messanordnung zur Messung der Testvorlagen im Transportweg der Vorlage unmittelbar aufeinanderfolgend angeordnet sind, und dass eine gemeinsame Beleuchtungseinrichtung vorgesehen ist, die sich über Messstation, Belichtungsstation und Transmissions-Messanordnung hinweg erstreckt. Dadurch kann mit ein und derselben Beleuchtungseinrichtung sowohl die Ausmessung der Kopiervorlage, das Aufkopieren der Vorlage, wie auch die Ausmessung der Teststreifen erfolgen. Dies bedeutet eine Einsparung von weiteren Beleuchtungseinrichtungen, die sonst für jede Station bzw. Anordnung separat erforderlich wären und vereinfacht somit die Vorrichtung noch weiter.

Ein weiteres Ausführungsbeispiel der erfindungsgemässen Vorrichtung zeichnet sich dadurch aus, dass Transportmittel vorgesehen sind, die einen Antriebsmotor umfassen und die die Vorlagen durch die Transmissions-Messanordnung transportieren, wobei diese Transportmittel durch die ersten Transportmittel gebildet sind, welche die Vorlagen zur Messstation bzw. zur Belichtungsstation transportieren. Mit anderen Worten heisst das, dass genau die Transportmittel, die die Kopiervorlagen zur Ausmessung durch die Messstation und zum Aufkopieren durch die Belichtungsstation transportieren, auch die Testvorlagen durch die Transmissions-Messanordnung transportieren. Dadurch werden nicht mehrere Transportmittel für mehrere Stationen erforderlich, was den Aufwand für das Gerät weiter reduziert. Insbesondere bietet sich dies auch bei dem Ausführungsbeispiel an, bei dem die Messstation, die Belichtungsstation und die Transmissions-Messanordnung unmittelbar aufeinanderfolgend angeordnet sind.

Das eben erwähnte Ausführungsbeispiel, bei dem die Transportmittel für den Transport der Testvorlagen durch die Transmissions-Messanordnung durch die ersten Transportmittel gebildet sind, die die Kopiervorlagen durch die Messstation und die Belichtungsstation transportieren, kann noch dadurch weitergebildet sein, dass zweite Transportmittel vorgesehen sind, welche die Kopien durch die Remissions-Messanordnung transportieren, und dass diese zweiten Transportmittel vom gleichen Antriebsmotor antreibbar sind wie die ersten Transportmittel. Bei diesem Ausführungsbeispiel ist dann nur noch ein Antriebsmotor erforderlich, was eine weitere Reduktion des Geräteaufwands bedeutet.

In einem weiteren praktischen Ausführungsbeispiel ist im Bereich der Vorlagen-Bühne in Transportrichtung betrachtet zunächst eine Detektionsanordnung zur Detektion des Anfangs bzw. Endes des Inhalts der Vorlagen vorgesehen. Es folgt dann die Messstation, die Belichtungsstation und die Transmissions-Messanordnung. Die von diesen Stationen bzw. Anordnungen und die von der Remissions-Messanordnung erzeugten Signale werden einer Elektronik zugeführt. Ferner ist ein Steuercomputer vorgesehen, der die einzelnen Signale aus dieser Elektronik ausliest und der aufgrund dieser ausgelesenen Signale entsprechende Steuersignale erzeugt, z.B. zur Steuerung des Antriebsmotors oder zur Steuerung der erforderlichen Kopierlichtmengen. Ferner verarbeitet dieser Steuercomputer Messdaten von der Messstation weiter, z.B. ermittelt er aus diesen Messdaten die für das Aufkopieren der Vorlage auf das Kopiermaterial erforderlichen Kopierlichtmengen. Dies ist ein besonders einfaches Gerätekonzept, bei dem die gesamte "Intelligenz" des Geräts auf den Steuercomputer beschränkt ist.

Besonders vorteilhaft und praktisch sind die bisher beschriebenen Ausführungsbeispiele der erfindungsgemässen Vorrichtung für einen Einsatz in einem Minilabor zur Herstellung von Kopien von fotografischen Kopiervorlagen. Ein solches Minilabor weist eine Kopierstation zum Aufkopieren der entwickelten Kopiervorlagen auf fotografisches Kopiermaterial sowie eine zweiten Entwicklungsstation zur Entwicklung des Kopiermaterials. Die Kopierstation eines solchen Minilabors kann dabei eine Vorrichtung gemäss einem der vorstehend beschriebenen Ausführungsbeispiele umfassen.

Im folgenden wird die Erfindung anhand der Zeichnung näher erläutert Es zeigen in schematischer Darstellung:
- Fig. 1: eine Aufsicht auf die Vorlagen-Bühne eines Ausführungsbeispiels der erfindungsgemässen Vorrichtung,
- Fig. 2: einen Längsschnitt durch die Vorlagen-Bühne gemäss Fig. 1,
- Fig. 3: den Ausschnitt III (die Remissions-Anordnung) der Fig. 2 vergrössert
und
- Fig. 4: ein Blockschaltbild der Elektronik und des Steuercomputers eines Ausführungsbeispiels der erfindungsgemässen Vorrichtung.

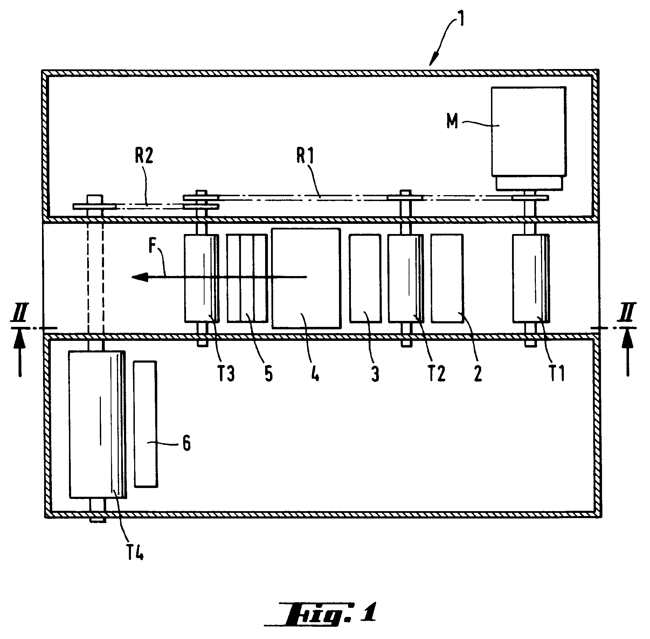

In der Aufsicht gemäss Fig. 1 auf eine Vorlagen-Bühne 1 eines Ausführungsbeispiels der erfindungsgemässen Vorrichtung erkennt man nur ganz prinzipiell, wie einzelne Stationen bzw. Anordnungen im Bereich der Vorlagen-Bühne 1 angeordnet sind. Zu erkennen sind einige Transportwalzenpaare, von denen jeweils nur die obere Transportwalze T1,T2,T3 und T4 dargestellt ist, sowie zwei endlose Riemen R1 und R2, wobei der Riemen R1 um die Achsen der Transportwalzen T1,T2 und T3 geführt ist und der Riemen R2 um die Achsen der Transportwalzen T3 und T4. Ebensogut kann auch nur ein einziger endloser Riemen vorgesehen sein, der um alle Achsen herum geführt ist. Die Achse der Transportwalze T1 wird direkt von einem Motor M, insbesondere einem Schrittmotor, angetrieben. Durch die Führung der Riemen R1 und R2 über die Achsen der Transportwalzen können diese beim Betrieb allesamt vom Motor M angetrieben werden.

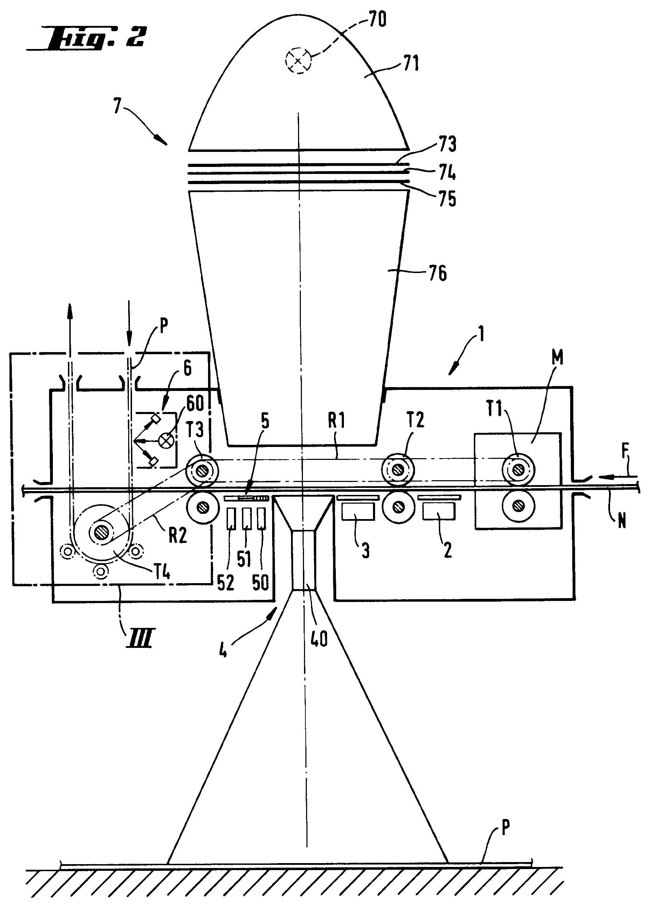

Ferner sind in Fig. 1 angedeutet eine Detektionsanordnung 2 zur Detektion des Anfangs bzw. Endes des Inhalts einer Kopiervorlage N (Fig. 2) und weiterhin eine Messstation 3 zur Ausmessung von Kopiervorlagen, eine Belichtungsstation 4 zum Aufbelichten der Kopiervorlagen N (z.B. Negative) auf Kopiermaterial P (z.B. fotografisches Papier). Ausserdem sind noch zu erkennen eine Transmissions-Messanordnung 5 sowie eine Remissionsmessanordnung 6.

Aus dem in Fig. 2 dargestellten Längsschnitt durch die Vorlagen-Bühne 1 wird die Art und Weise der Anordnung der einzelnen Stationen bzw. Anordnungen noch deutlicher. Die Riemen R1 und R2 sind hier strichliert dargestellt, um zu verdeutlichen, dass sie nicht in der Zeichenebene sondern hinter der Zeichenebene verlaufen. Das gleiche gilt für die Remissions-Messanordnung 6 und das dort dargestellte Kopiermaterial P. In Fig. 2 erkennt man zusätzlich zu den bereits anhand der Erläuterung von Fig. 1 angesprochenen Stationen bzw. Anordnungen noch eine Beleuchtungseinrichtung 7. Diese umfasst eine Lichtquelle 70 einen Reflektor 71, Filter und Verschlüsse 73,74,75 und einen Lichtschacht 76, der das Licht zur Vorlagen-Bühne führt. Ferner erkennt man noch eine Abbildungsoptik 40 zur Abbildung der belichteten Vorlage N auf das Kopiermaterial P.

Anhand der Fig. 2 soll nun die Funktionsweise des dargestellten Ausführungsbeispiels der erfindungsgemässen Vorrichtung grob erläutert werden, wobei zu einem späteren Zeitpunkt noch auf einzelne Details eingegangen wird. Dabei soll zunächst darauf eingegangen werden, wie die Teststreifen behandelt werden, um die nicht dargestellten nasschemischen Bäder zu überprüfen bzw. um die Grundeinstellungen für das Aufkopieren zu überprüfen.

Zur Überprüfung der Qualität des nasschemischen Bads für die Entwicklung der Vorlagen wird eine vom Hersteller normiert belichtete und in dem zu überprüfenden Bad bereits entwickelte Testvorlage N auf der Vorlagen-Bühne 1 in Richtung des Pfeils F transportiert. Dies erfolgt dadurch, dass der Schrittmotor M die Transportwalze T1 antreibt, wodurch mittels der Riemen R1 und R2 alle Transportwalzenpaare angetrieben werden. Die Testvorlage N erreicht zuerst die Detektionseinrichtung 2. Dort wird der Anfang bzw. dann auch das Ende des Inhalts der Testvorlage N detektiert ("Frame-Detection"). Die Testvorlage N erreicht anschliessend die Messstation 3. Dort wird später beim Betrieb die Kopiervorlage ausgemessen mittels hierfür üblicher Messeinrichtungen ("Scanner"). Die Ausmessung der Testvorlage N mittels des Scanners ist nur bedingt geeignet, um die Qualität des nasschemischen Bads für die Entwicklung der Vorlagen zu überprüfen, da es zunächst darum geht, die Qualität des nasschemischen Bads für die Entwicklung der Vorlagen zu überprüfen und der Scanner in seiner Empfindlichkeit an die Eigenschaften des Kopiermaterials P angepasst ist. Eine Aufbelichtung in der Belichtungsstation 4 auf das Kopiermaterial P ist bei der Überprüfung des nasschemischen Bads für die Vorlagen ebenfalls nicht erforderlich, da im Prinzip zu diesem Zweck nur die normiert belichteten Testvorlagen N im zu überprüfenden nasschemischen Bad entwickelt werden und anschliessend ausgemessen werden müssen, allerdings mit einer normierten Bewertung des gemessenen Spektrums, die von der Bewertung des Spektrums durch den Scanner doch signifikant abweicht. Daher ist der Berichtungsstation 4 nachfolgend die Transmissions-Messanordnung 5 vorgesehen. Diese umfasst drei Sensoren 50,51,52 für die Farben Rot, Grün und Blau. Vor der Ausmessung der entwickelten Testvorlage wird zunächst das Spektrum der Beleuchtungseinrichtung 7 mit Hilfe der Sensoren 50,51,52 gemessen, also eine Art Kalibrierung durchgeführt, damit bekannt ist, mit welchem Spektrum die Testvorlage bei der Messung beaufschlagt wird. Bei der anschliessenden Ausmessung der Testvorlage mit Hilfe der Transmissions-Messanordnung 5 wird das von den Sensoren 50,51,52 erfasste Spektrum nach einer vorgeschriebenen Norm - z.B. ANSI/ISO 5/3-1984, ANSI PH 2.18-1985 - bewertet. Die gemessenen Werte werden dann mit Sollwerten verglichen und in Abhängigkeit der ermittelten Werte wird das nasschemische Bad für die Entwicklung der Vorlagen aufgefrischt, ergänzt, erneuert oder auch unverändert beibehalten.

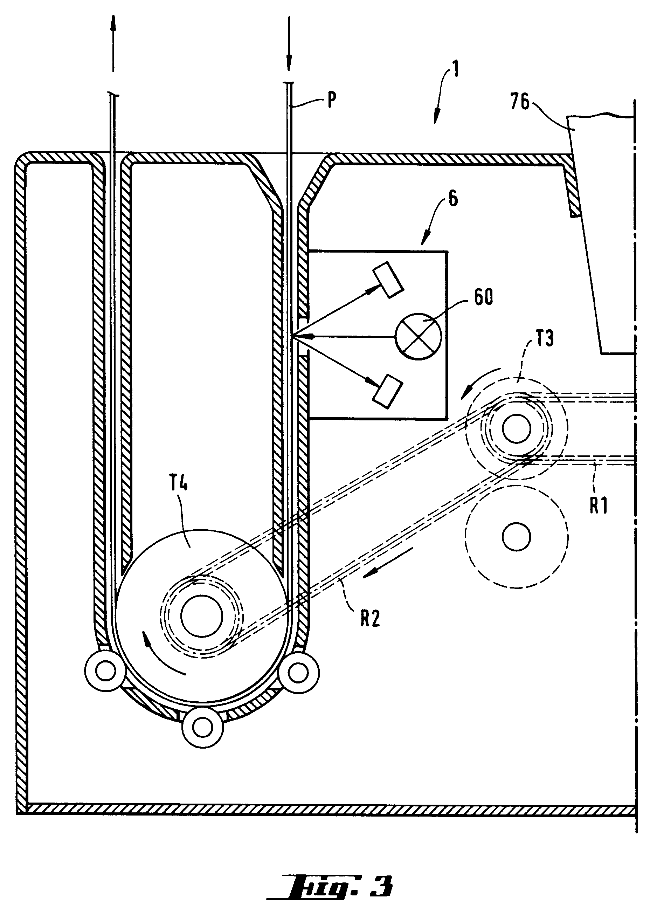

Zur Überprüfung des nasschemischen Bads für die Entwicklung des belichteten Kopiermaterials P wird im Prinzip in ählicher Weise vorgegangen. Die Vorgehensweise ist dabei aus Fig. 3 gut ersichtlich. Vom Hersteller normiert belichtete Testkopien werden zunächst in dem zu überprüfenden nasschemischen Bad entwickelt und anschliessend durch die Remissions-Messanordnung 6 transportiert. Vor der Ausmessung der entwickelten Testkopien wird ebenfalls zunächst das Spektrum der Beleuchtungseinrichtung 60 der Remissions-Anordnung 6 gemessen, also ebenfalls eine Kalibrierung durchgeführt. Bei der anschliessenden Ausmessung der Testkopien mit Hilfe der Remissions-Messanordnung 6 wird das remittierte Licht erfasst und das Spektrum ebenfalls nach einer vorgeschriebenen Norm bewertet. Insbesondere kann es sich bei der Remissions-Messanordnung um eine Anordnung handeln, wie sie beispielsweise in der US 4,645,350 A beschrieben ist. Die ermittelten Werte werden wieder mit Sollwerten verglichen und als Folge wird das nasschemische Bad für die Entwicklung des berichteten Kopiermaterials aufgefrischt, ergänzt, erneuert oder auch unverändert beibehalten.

Nachdem die erforderliche Qualität der Bäder sichergestellt ist, müssen noch die Grundeinstellungen für das Aufkopieren überprüft werden. Dies kann beispielsweise erfolgen, indem eine bereits entwickelte Kopiervorlage N in der Messstation 3 ausgemessen und mit den ermittelten Kopierlichtmengen, die mit Hilfe der Filter bzw. Verschlüsse 73,74,75 gesteuert werden können, in der Belichtungsstation 4 mittels der Abbildungsoptik 40 auf das Kopiermaterial P aufbelichtet. Die Kopie wird anschliessend mit Hilfe der Remissions-Messanordnung 6 gemessen. Da die erforderliche Qualität der nasschemischen Teile sichergestellt ist, können nun die Einstellungen für das Aufkopieren, insbesondere die Belichtungszeiten mit dem Licht verschiedener Farben, in Abhängigkeit von den Messwerten variiert oder beibehalten werden. Damit sind die routinemässigen Überprüfungen der nasschemischen Bäder und der Grundeinstellungen für das Aufkopieren abgeschlossen und es kann mit dem Aufkopieren von Kopiervorlagen begonnen werden.

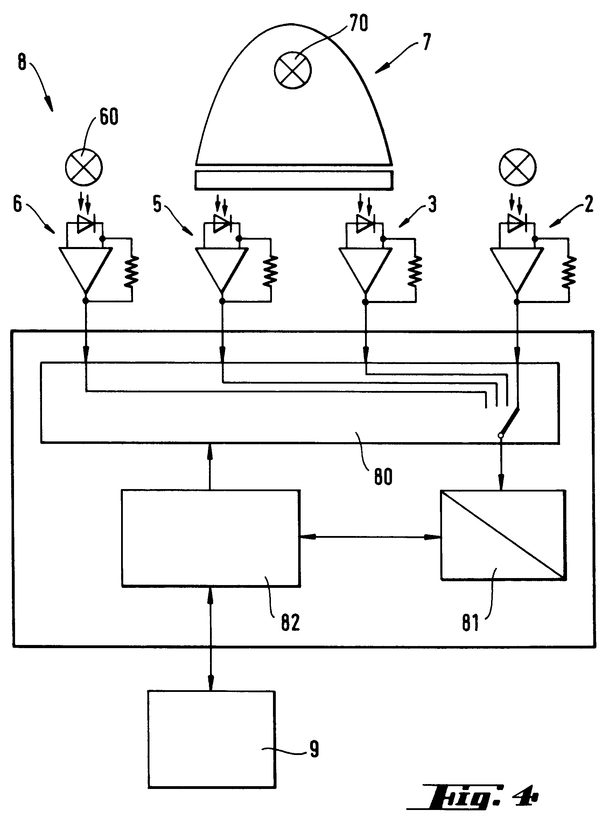

Dieses Aufkopieren von Kopiervorlagen N auf Kopiermaterial P soll nun anhand der Fig. 2 und der Fig. 4 erläutert werden, in welcher zusätzlich zu bereits aus anderen Figuren bekannten Stationen bzw. Anordnungen eine Elektronik 8 und ein Steuercomputer 9 zu erkennen sind, deren Funktionsweise noch erläutert wird. Zunächst wird die Kopiervorlage N mit Hilfe des Schrittmotors M in Richtung des Pfeils F transportiert. Die Detektionsanordnung 2 detektiert den Anfang und Ende eines auf der Kopiervorlage vorhandenen Bildfelds ("Frame-Detection") und erzeugt ein Signal, welches die Elektronik 8 z.B. über einen Multiplexer 80, einen A/D-Wandler 81 und eine Schnittstelle 82 an den Steuercomputer 9 weiterleitet. Aufgrund dieses Signals steuert der Steuercomputer 9 den Schrittmotor M genau so, dass das Bildfeld ("Frame") der Kopiervorlage N über der Messstation 3 zu liegen kommt und ausgemessen werden kann ("Scanning"). Die Messwerte werden über den A/D-Wandler vom Steuercomputer 9 abgefragt, und aus diesen Werten werden die für das Aufkopieren des Bildfelds der Kopiervorlage N auf das Kopiermaterial P erforderlichen Kopierlichtmengen ermittelt. Der Steuercomputer 9 erzeugt dann entsprechende Signale zur Steuerung der Filter bzw. Verschlüsse 73,74,75. Der Transmissions-Anordnung 5 kommt beim Normalbetrieb, wenn also die Überprüfung der nasschemischen Bäder und der Einstellungen für das Aufkopieren abgeschlossen ist, keine besondere Bedeutung zu.

Die auf diese Art und Weise von der Kopiervorlage N erstellten Kopien werden anschliessend mit Hilfe der Remissions-Messanordnung 6 in der bereits erläuterten Art und Weise ausgemessen. Die so ermittelten Messwerte werden ebenfalls über den Multiplexer 80 und den A/D-Wandler 81 dem Steuercomputer 9 zugeführt. Da die Kopiervorlage N vor dem Aufkopieren ausgemessen worden ist, kann der Steuercomputer 9 mittels der mit der Remissions-Messanordnung 6 ermittelten Werte die Einstellung für das Aufkopieren überwachen und gegebenenfalls die Filter und Verschlüsse 73,74,75 entsprechend steuern.

An dieser Stelle soll noch erwähnt werden, dass die Transmissions-Anordnung 5 ebenfalls über den Multiplexer 80 und den A/D-Wandler 81 und die Schnittstelle 82 mit dem Steuercomputer 9 verbunden ist. Es kann also auch die Überprüfung der nasschemischen Bäder mittels der gleichen Elektronik 8 und mit dem gleichen Steuercomputer 9 erfolgen wie beim normalen Kopierbetrieb.

Die Vorteile der beschriebenen Vorrichtung ergeben sich daher wie folgt: Das Bedienungspersonal muss immer nur ein und dasselbe Gerät bedienen, da kein separates Gerät erforderlich ist, welches eine Transmissions- und eine Remissions-Anordnung umfasst zur Überprüfung der Bäder. Zum anderen ermöglicht die Integration dieser Anordnungen in die Vorlagen-Bühne eine besonders platzsparende Gerätekonzeption. Ausserdem kann mit ein und derselben Beleuchtungseinrichtung sowohl die Ausmessung der Kopiervorlage, das Aufkopieren der Vorlage, wie auch die Ausmessung von Teststreifen erfolgen. Dies bedeutet eine Einsparung von weiteren Beleuchtungseinrichtungen, die sonst für jede Station bzw. Anordnung separat erforderlich wären und vereinfacht somit die Vorrichtung noch weiter. Die Transportmittel, die die Kopiervorlagen zur Ausmessung durch die Messstation und zum Aufkopieren durch die Belichtungsstation transportieren, transportieren auch die Testvorlagen durch die Transmissions-Messanordnung. Dadurch werden nicht mehrere Transportmittel für mehrere Stationen erforderlich, was den Aufwand für das Gerät weiter reduziert. Mittels der beschriebenen Transportmittel für die Remissions-Messanordnung, ist es sogar möglich dass die Transportmittel, die den Transport von Kopien und Testkopien durch die Remissions-Anordnung ermöglichen, vom gleichen Antriebsmotor antreibbar sind wie die Transportmittel, die die Kopiervorlagen oder Testvorlagen transportieren. Es ist also lediglich ein Antriebsmotor erforderlich, was eine weitere Reduktion des Geräteaufwands bedeutet.

Durch die besondere Ausgestaltung der Elektronik und durch ihr Zusammenwirken mit dem Steuercomputer ergibt sich ein besonders einfaches Gerätekonzept, bei dem die gesamte "Intelligenz" des Geräts auf den Steuercomputer beschränkt ist. Besonders praktisch sind die beschriebenen Ausführungsbeispiele der erfindungsgemässen Vorrichtung für einen Einsatz in der Kopierstation in einem kompletten Minilabor zur Herstellung von Kopien von fotografischen Kopiervorlagen.

## Patentansprüche

1. Vorrichtung zum Aufkopieren von im wesentlichen transparenten fotografischen Kopiervorlagen (N) auf fotografisches Kopiermaterial (P), mit einer Vorlagen-Bühne (1), auf der die Kopiervorlage (N) mit Hilfe von ersten Transportmitteln (T1, T2, R1, M) zu einer Messstation (3) transportiert wird, wo sie mit Licht beaufschlagt und ausgemessen wird und anschliessend aus dieser Messung die für die Belichtung erforderlichen Kopierlichtmengen ermittelt werden, mit einer der Messstation in Transportrichtung nachfolgenden Belichtungsstation (4), wo die Vorlage (N) mit den ermittelten Kopierlichtmengen beaufschlagt und auf das Kopiermaterial (P) aufkopiert wird, und mit einer Transmissions- (5) und einer Remissions-Messanordnung (6) für die Ausmessung von Testvorlagen bzw. Testkopien, dadurch gekennzeichnet, dass die Transmissions- (5) und die Remissions-Messanordnung (6) baulich im Bereich der Vorlagen-Bühne (1) vorgesehen sind, auf der die Kopiervorlage (N) transportiert, ausgemessen und auf das Kopiermaterial (P) aufkopiert wird, wobei auf der Vorlagen-Bühne (1) die Messstation (3), die Belichtungsstation (4) und die Transmissions-Messanordnung (5) im Transportweg der Vorlage (N) unmittelbar aufeinanderfolgend angeordnet sind, und eine gemeinsame Beleuchtungseinrichtung (7) vorgesehen ist, die sich über Messstation (3), Belichtungsstation (4) und Transmissions-Messanordnung (5) hinweg erstreckt.

2. Vorrichtung nach einem der Ansprüche 1, weiter dadurch gekennzeichnet, dass Transportmittel vorgesehen sind, die einen Antriebsmotor (M) umfassen und die die Vorlagen (N) durch die Transmissions-Messanordnung (5) transportieren, und dass diese Transportmittel durch die ersten Transportmittel (T1,T2,T3,R1,M) gebildet sind, welche die Vorlagen (N) zur Messstation (3) bzw. zur Belichtungsstation (4) transportieren.

3. Vorrichtung nach Anspruch 2, weiter dadurch gekennzeichnet, dass zweite Transportmittel (T4,R2) vorgesehen sind, welche die Kopien durch die Remissions-Messanordnung (6) transportieren, und dass diese zweiten Transportmittel (T4,R2) vom gleichen Antriebsmotor (M) antreibbar sind wie die ersten Transportmittel (T1,T2,T3,R1,M).

4. Vorrichtung nach einem der Ansprüche 1 bis 3, weiter dadurch gekennzeichnet, dass im Bereich der Vorlagen-Bühne (1) in Transportrichtung (F) betrachtet zunächst eine Detektionsanordnung (2) zum Detektieren des Anfangs bzw. Endes des Inhalts der Test-bzw. Kopiervorlagen (N), dann die Messstation (3), die Belichtungsstation (4) und die Transmissions-Messanordnung (5) aufeinanderfolgend angeordnet sind, und dass die von diesen Stationen bzw. Anordnungen und die von der Remissions-Messanordnung (6) erzeugten Signale einer Elektronik (8) zugeführt sind, und dass ein Steuercomputer (9) vorgesehen ist, der die einzelnen Signale aus dieser Elektronik (8) ausliest und der aufgrund dieser ausgelesenen Signale entsprechende Steuersignale erzeugt, z.B. zur Steuerung des Antriebsmotors (M) oder zur Steuerung der erforderlichen Kopierlichtmengen, und/oder Messdaten von der Messstation (3) weiterverarbeitet, z.B. aus diesen Messdaten die für das Aufkopieren der Vorlage (N) auf das Kopiermaterial (P) erforderlichen Kopierlichtmengen ermittelt, und der Messdaten von der Transmissions-(5) bzw. Remissions-Messanordnung (6) verarbeitet und Informationen über den Zustand nasschemischer Entwicklungsbäder ausgibt.

5. Minilabor zur Herstellung von Kopien von fotografischen Kopiervorlagen, mit einer Kopierstation zum Aufkopieren von entwickelten Kopiervorlagen auf fotografisches Kopiermaterial und mit einer Entwicklungsstation zur Entwicklung des Kopiermaterials, dadurch gekennzeichnet, dass die Kopierstation eine Vorrichtung nach einem der Ansprüche 1 bis 4 umfasst.

## Claims

1. Device to copy essentially transparent photographic copying originals (N) onto photographic copy material (P), with an original platform (1) on which the copying originals (N) are transported to a measuring station (3) using the first transport system (T1, T2, R1, M), where they are exposed to light and measured, and the copier light quantities required for exposure are then calculated from this measurement, with an exposure station (4) following the measuring station in the direction of transport, where the original (N) is exposed to the calculated quantity of light and copied onto the copy material (P), and with a transmission (5) and a reflection (6) measuring unit for the measurement of test originals and test copies, characterised in that the transmission (5) and a reflection (6) measuring unit are built in to the region of the original platform (1) on which the copying original (N) is transported, measured and copied onto the copy material (P), in which the measuring station (3), the exposure station (4) and the transmission measuring unit (5) on the original platform (1) are arranged in immediate sequence on the transport path of the original (N), and a common exposure device (7) is provided that covers the measuring station (3), the exposure station (4) and the transmission measuring unit (5).

2. Device according to Claim 1, further characterised in that a transport system is provided that comprises a drive motor (M) and that transports the originals (N) through the transmission measuring unit (5), and that this transport system is formed of the first transport system (T1, T2, T3, R1, M), which transport the originals (N) to the measuring station (3) and to the exposure station (4).

3. Device according to Claim 2, further characterised in that a second transport system (T4, R2) is provided, which transports the copies through the reflection measuring unit (6) and that this second transport system (T4, R2) can be driven by the same drive motor (M) as the first transport system (T1, T2, T3, R1, M).

4. Device according to one of Claims 1 to 3, further characterised in that a detection unit (2) is provided in the region of the original platform (1) in the direction of transport (F) to detect the start and finish of the content of the test or copying original (N), followed by the measuring station (3), the exposure station (4) and the transmission measuring unit (5) in sequence, and that the signals generated from these stations and units and those from the reflection measuring unit (6) are passed to an electronic unit (8), and that a control computer (9) is provided that reads the individual signals from this electronic unit (8) and generates the appropriate signals on the basis of these signals read in, e.g. to control the drive motor (M) or to control the quantity of light required, and/or processes measuring data from the measuring station (3), e.g. calculates the quantity of light required to copy the original (N) onto the copy material (P) from this measuring data, and processes the measuring data from the transmission (5) and reflection (6) measuring unit and gives information on the state of the wet chemical development baths.

5. Mini-laboratory to manufacture copies of photographic originals, with a copier station to copy developed copying originals onto photographic copy material and with a developing station to develop the copy material, characterised in that the copier station includes a device according to one of Claims 1 to 4.

## Revendications

1. Dispositif de tirage d'originaux photographiques sensiblement transparents (N) sur un support de tirage photographique (P), avec une plate-forme à originaux (1) sur laquelle l'original (N) est transporté à l'aide de premiers moyens de transport (T1, T2, R1, M) jusqu'à une station de mesure (3) où il est exposé à une lumière et analysé, après quoi les quantités de lumière de tirage nécessaires à l'insolation sont calculées sur la base de cette mesure, avec une station d'insolation (4) qui est implantée en aval de la station de mesure par rapport à la direction de transport (4) et dans laquelle l'original (N) est exposé aux quantités de lumière de tirage calculées et est tiré sur le support de tirage (P), et avec des agencements de mesure par transmission (5) et par luminance de réflexion (6) pour analyser des originaux d'essai et, respectivement, des tirages d'essai, caractérisé en ce que les agencements de mesure par transmission (5) et par luminance de réflexion (6) sont implantés physiquement dans la zone de la plate-forme à originaux (1) sur laquelle l'original (N) est transporté, analysé et tiré sur le support de tirage (P), la station de mesure (3), la station d'insolation (4) et l'agencement de mesure par transmission (5) se succédant immédiatement sur le trajet de transport de l'original (N) sur la plate-forme à originaux (1), et un dispositif d'éclairage commun (7) étant prévu, lequel s'étend au-dessus de la station de mesure (3), de la station d'insolation (4) et de l'agencement de mesure par transmission (5).

2. Dispositif selon l'une des revendications 1, également caractérisé en ce qu'il est prévu des moyens de transport qui comprennent un moteur d'entraînement (M) et qui transportent les originaux (N) à travers l'agencement de mesure par transmission (5), et en ce que lesdits moyens de transport sont formés par les premiers moyens de transport (T1, T2, T3, R1, M) qui transportent les originaux (N) jusqu'à la station de mesure (3) et, respectivement, jusqu'à la station d'insolation (4).

3. Dispositif selon la revendication 2, également caractérisé en ce qu'il est prévu des seconds moyens de transport (T4, R2) qui transportent les tirages à travers l'agencement de mesure par luminance de réflexion (6), et en ce que lesdits seconds moyens de transport (T4, R2) sont entraînés par le même moteur d'entraînement (M) que les premiers moyens de transport (T1, T2, T3, R1, M).

4. Dispositif selon l'une des revendications 1 à 3, également caractérisé en ce que, par rapport à la direction de transport (F), d'abord un agencement de détection (2) pour détecter le début et, respectivement, la fin du contenu des originaux d'essai ou des originaux à tirer (N), puis la station de mesure (3), la station d'insolation (4) et l'agencement de mesure par transmission (5) se succèdent dans la zone de la plate-forme à originaux (1), et en ce que les signaux produits par ces stations et, respectivement, par ces agencements et ceux produits par l'agencement de mesure par luminance de réflexion (6) sont envoyés à un module électronique (8), et en ce qu'il est prévu un calculateur de commande (9) qui lit les différents signaux dans ledit module électronique (8) et qui, à partir desdits signaux lus, génère des signaux de commande correspondants, par exemple pour commander le moteur d'entraînement (M) ou pour commander les quantités de lumière de tirage nécessaires, et/ou qui exploite des données de mesure de la station de mesure (3), par exemple calcule à partir desdites données de mesure les quantités de lumière de tirage nécessaires pour tirer l'original (N) sur le support de tirage (P), et qui traite des données de mesure des agencements de mesure par transmission (5) et, respectivement, par luminance de réflexion (6) et fournit des informations sur l'état des bains de développement chimique par voie humide.

5. Mini-laboratoire pour la réalisation de tirages d'originaux photographiques, avec une station de tirage pour tirer des originaux développés sur un support de tirage photographique, et avec une station de développement pour développer le support de tirage, caractérisé en ce que la station de tirage comprend un dispositif selon l'une des revendications 1 à 4.
